# FASCICULE DE BREVET EUROPEEN

(11) **EP 1 947 482 B1**
(45) Date de publication et mention de la délivrance du brevet: **01.09.2010**
(21) Numéro de dépôt: 08100401.2
(22) Date de dépôt: 14.01.2008
(51) Int. Cl.: G02B 1/06, G02B 26/02, G02F 1/167, G02B 5/24, B01L 3/00, F15C 5/00, G02B 5/30

(54) **Realisation de cavités remplies par un matériau fluidique dans un composé microtechnologique optique**
Erstellung von Kavitäten, die mit einem flüssigen Material in einer optischen, mikrotechnologischen Verbindung gefüllt sind
Formation of cavities filled with a fluidic material in an optical micro-technological compound

(30) Priorité: 16.01.2007 FR 0752706
(43) Date de publication de la demande: 23.07.2008
(73) Titulaire: Commissariat à l'Énergie Atomique et aux Énergies Alternatives, 75015 Paris (FR)
(72) Inventeur: Souriau, Jean-Charles, 38120, SAINT-EGREVE (FR)
(74) Mandataire: Ilgart, Jean-Christophe

(56) Documents cités:
- WO-A-02/088671
- WO-A-03/021346
- WO-A-2006/067650
- WO-A-2006/116616
- US-A- 3 863 249
- US-B1- 7 136 216

## Description

### DOMAINE TECHNIQUE

L'invention se rapporte à la réalisation de dispositifs contenant des cavités hermétiques de dimensions microniques délimitées par des parois, dans lesquelles un fluide fonctionnel est introduit. Une application particulière concerne les dispositifs « optiques » pour lesquels le fluide fonctionnel possède des qualités optiques spécifiques.

L'invention concerne plus particulièrement le procédé de scellement de telles cavités et les dispositifs ainsi obtenus.

### ÉTAT DE LA TECHNIQUE ANTÉRIEURE

Pour certaines applications, notamment optiques, il est requis d'encapsuler de façon étanche un liquide fonctionnel dans des cavités dont les dimensions sont de l'ordre de 50 à 500 microns en largeur et de l'ordre de 5 à 20 microns en profondeur et qui sont délimitées par des parois typiquement de 1 à 10 microns de large. Ces cavités peuvent être obtenues par diverses techniques, notamment par micro-usinage d'un substrat ou par dépôt et structuration d'une couche par des techniques de gravure ou de photolithographie ou toute autre technique appropriée.

Le fluide fonctionnel à encapsuler est fonction de l'application. Il peut être composé d'une ou plusieurs substances introduites sous forme de gel ou de liquide et choisies pour leurs propriétés spécifiques, par exemple leurs propriétés optiques, comme leur indice de réfraction, leur capacité d'absorption lumineuse ou de polarisation, leur réponse à des stimuli électriques ou lumineux ....

Le problème qui se pose est de maintenir le fluide de façon étanche dans ces cavités.

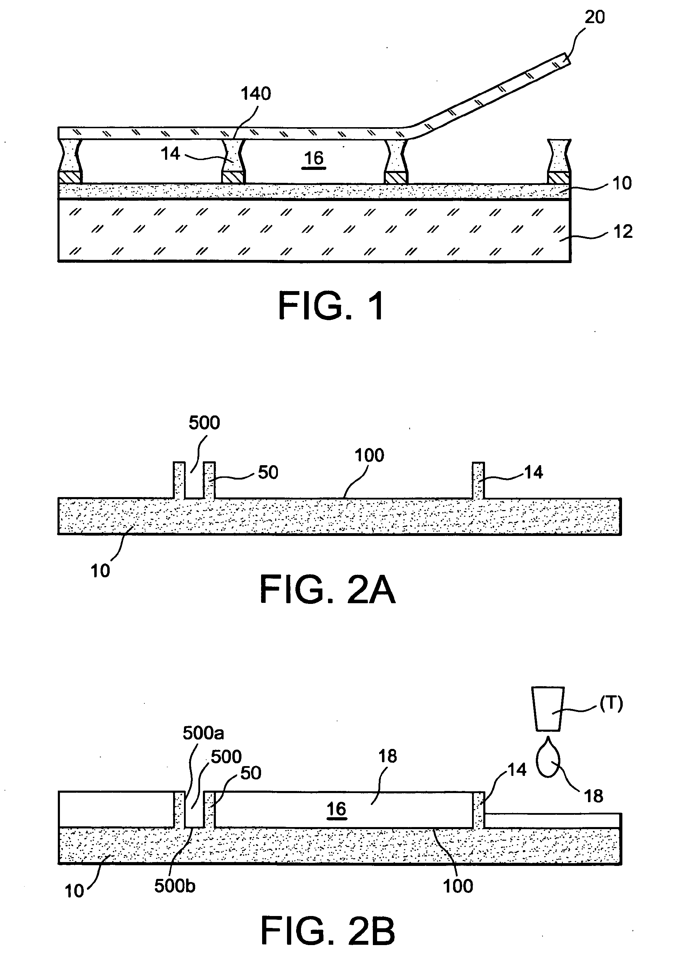

Une solution existante, telle que montrée à la figure 1, consiste à fermer les cavités en laminant par-dessus un film souple préencollé, par exemple un film en PET. L'adhérence du film se fait alors au niveau du sommet 140 des parois 14. Cette solution présente comme inconvénients majeurs, le risque d'une part de piéger des bulles d'air dans les cavités 16 lors du laminage et d'autre part d'enlever du fluide fonctionnel de l'intérieur de celles-ci en le projetant sur le sommet 140 des parois 14 et empêchant par là, l'adhérence de la colle du film. En outre, la surface totale du sommet des parois assurant l'adhérence du film souple est faible. Cette adhérence peut ne pas être suffisante si les cavités présentent dans le plan du substrat des dimensions trop importantes, notamment si le substrat a besoin d'être plié, par exemple lors de son report sur une surface bombée.

Le brevet EP 1 672 394 propose quant à lui, de réaliser une membrane plastique sur des cavités délimitées par des parois et contenant un liquide, par dépôt à basse pression d'un matériau plastique, le parylène (encore appelé poly-para-xylylène). Ce matériau polymérise à température ambiante pour former une couche uniforme épousant sa surface de dépôt. Comme dans le cas précédent, le film de parylène n'adhère au substrat qu'au niveau des sommets des parois des cavités, ce qui peut poser un problème d'adhérence du film plastique.

Le but de l'invention est de proposer un dispositif comportant une pluralité de cavités remplies d'un liquide fonctionnel, ce liquide étant maintenu dans la cavité de façon étanche et pérenne.

Un autre but de l'invention est de proposer un procédé qui permette de sceller des cavités remplies d'un fluide de façon efficace et industrielle.

### EXPOSÉ DE L'INVENTION

Selon l'invention, on réalise, outre les cavités, des logements formant point d'accroche d'un matériau de scellement des cavités.

A cette fin, l'invention concerne un dispositif comprenant une première couche de matériau, une deuxième couche de matériau et des parois délimitant des cavités étanches entre les première et deuxième couches de matériau au moins partiellement remplies d'un fluide, des plots solidaires de la première couche de matériau, et délimitant un logement rempli au moins partiellement du matériau de la deuxième couche.

Avantageusement, les parois et les plots ont sensiblement la même hauteur.

Selon une variante, au moins une partie de certains plots constitue des parois.

Selon une variante, tous les plots constituent en partie des parois.

De préférence, au moins une partie des plots sont situées à l'intersection de plusieurs parois.

Selon une variante, au moins une partie des plots sont adjacents aux parois.

Avantageusement, la deuxième couche est en contact de la première couche au niveau des logements.

Avantageusement encore, les cavités sont remplies d'un fluide fonctionnel de qualités optiques prédéterminées.

Le fluide peut être un liquide photosensible ou thermosensible, ou un liquide d'indice optique déterminé.

Avantageusement, le matériau de la deuxième couche est du parylène.

Avantageusement encore, le matériau de la deuxième couche est déposé de façon conforme.

Selon une première variante, les logements sont complètement remplis du matériau de la deuxième couche.

Selon une deuxième variante alternative, les logements sont partiellement remplis de matériau de la deuxième couche. Les logements partiellement remplis de matériau de la deuxième couche peuvent être remplis avantageusement complètement par un matériau. Ce matériau a de préférence le même indice optique que celui du fluide fonctionnel, afin de limiter les problèmes de diffusion optique induits par la présence des plots, après le dépôt du matériau de scellement dans le logement des plots et fermant les cavités. Pour faciliter ce remplissage, sans trop avoir à contrôler les paramètres, ce matériau de même indice optique peut être déposé de façon à constituer une couche uniforme au-dessus de la couche de matériau de scellement et dans le volume restant dans le logement de chaque plot.

De préférence encore, le matériau de même indice optique que celui du fluide et remplissant complètement les logements des plots forme une troisième couche de matériau se superposant à la deuxième couche de matériau.

L'invention concerne également un procédé de réalisation d'un dispositif doté de cavités comportant un fluide fonctionnel séparées par des parois comprenant les étapes suivantes :
- la réalisation sur une structure de parois délimitant les cavités,
- la réalisation sur la face de la structure en contact avec les parois, de plots délimitant au moins un logement,
- le remplissage des cavités par un fluide fonctionnel,
- le dépôt conforme d'une couche continue d'un matériau de scellement fermant les cavités remplies de fluide fonctionnel et occupant au moins partiellement l'intérieur des logements.

Avantageusement, le dépôt conforme d'une couche continue d'un matériau de scellement est un dépôt de parylène. Celui-ci peut être un dépôt par CVD suivi d'une polymérisation à l'ambiante.

Selon un mode de réalisation avantageux, les plots sont réalisés selon le même procédé et simultanément aux parois.

La réalisation des parois et/ou des plots peut se faire avantageusement par photolithographie d'une résine.

Selon un mode de réalisation alternatif, la réalisation des parois et/ou des plots se fait par gravure au travers un masque d'une couche de polymère.

Avantageusement, le remplissage des cavités est réalisé par une technique de jet de fluide fonctionnel sous forme de gouttes à l'aide de tête(s) d'impression.

Après le dépôt du matériau de scellement dans le logement des plots et fermant les cavités, on effectue un remplissage du volume restant dans le logement revêtu du matériau de scellement par un matériau.

Après le dépôt du matériau de scellement dans le logement de plots et fermant les cavités, on peut réaliser un dépôt d'un matériau sur la couche de matériau de scellement et dans le volume restant dans le logement du plot.

Avantageusement, le dépôt de matériau est réalisé par une technique de type « spin coating » suivie d'un durcissement du matériau.

Les parois et plots peuvent également traverser entièrement une couche de matériau, par exemple transparent à, ou absorbant, la lumière, ou plus généralement le rayonnement d'intérêt, déposée sur un support.

En fonction de l'application souhaitée, la taille unitaire et la densité des plots au sein du réseau formé par les cavités peut varier. La forme des plots selon l'invention peut également varier (cylindrique, à section carrée...) .

Quels que soient ces paramètres choisis pour les plots, on cherche de préférence à ce que les plots finis selon le procédé de l'invention n'apportent pas de perturbation optique. En particulier, on peut s'assurer que leur surface totale ne dépasse pas 10 %, et préférentiellement, 4 % de la surface totale apparente recouverte de cavités et remplies par le fluide fonctionnel.

Le matériau de scellement choisi dépendra de l'application voulue, et selon une technique permettant une épaisseur uniforme de quelques centaines de nanomètre à quelques microns.

### BRÈVE DESCRIPTION DES DESSINS

D'autres caractéristiques et avantages de l'invention ressortiront plus clairement à la lecture de la description suivante et en référence aux dessins annexés, donnés à titre uniquement illustratif et nullement limitatifs.
La figure 1 illustre la fermeture d'un des modes de réalisation du procédé selon la demande FR 06 50466.
Les figures 2A à 2C illustrent un mode de réalisation du procédé selon l'invention.
Les figures 3A à 3D illustrent différentes variantes d'implantation des plots selon l'invention.
Les figures 4 et 5 illustrent deux modes de distribution avantageux des plots selon l'invention.

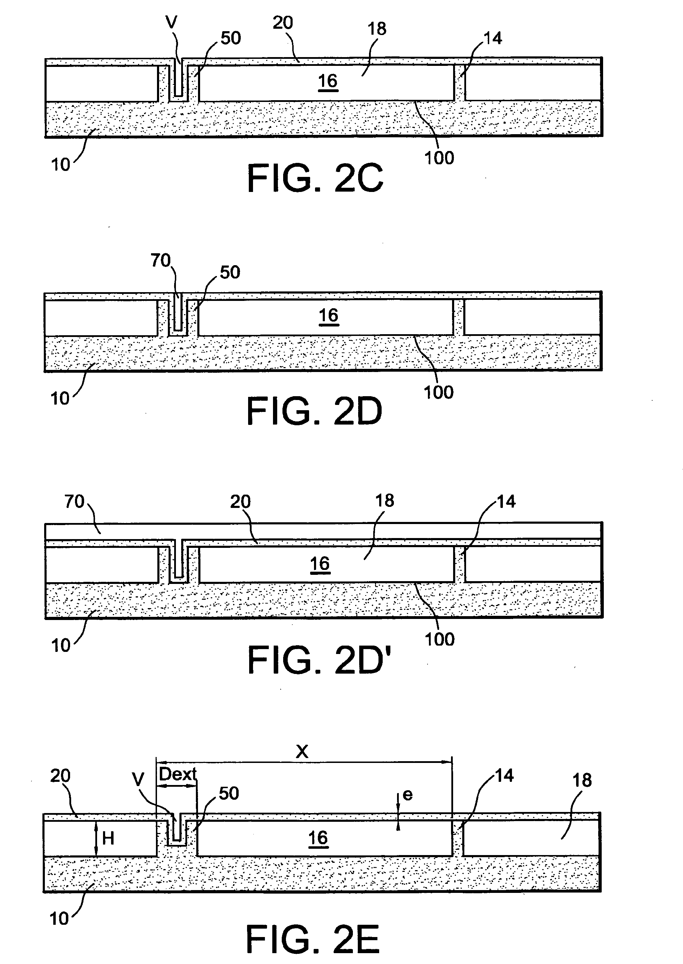

Les figures 2D et 2D' illustrent des étapes complémentaires avantageuses du procédé selon l'invention.

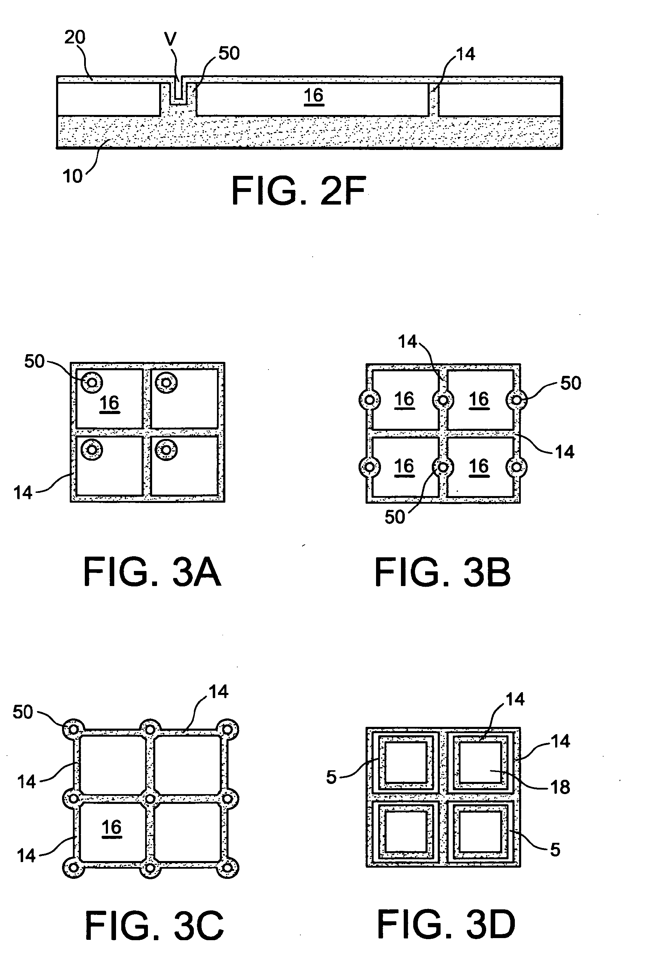

Les figures 2E et 2F illustrent des variantes de réalisation du dispositif selon l'invention.

### EXPOSÉ DÉTAILLÉ DE MODES DE RÉALISATION PARTICULIERS

Un exemple d'un dispositif selon l'invention est illustré figure 2C. Ce dispositif comporte une pluralité de cavités 16 au moins partiellement remplies d'un fluide 18. Chaque cavité 16 est délimitée par une couche ou un substrat 10, une couche dite de scellement 20, et latéralement, par des parois 14 et/ou des plots 50. Les plots 50 délimitent des logements 500 au moins partiellement remplis du matériau de la couche de scellement 20. Ainsi, la zone de contact entre la couche de scellement et un matériau solide est accrue par rapport aux dispositifs de l'art antérieur, ce qui permet d'obtenir une meilleure adhérence de la couche de scellement ainsi qu'une résistance mécanique accrue de cette couche notamment vis-à-vis de contraintes d'arrachement et/ou de cisaillement... Le fluide 18 est ainsi maintenu dans les cavités 16 de façon étanche et pérenne.

Comme il le sera expliqué par la suite, les plots 50,60 ou une partie d'entre eux peuvent faire partie intégrante des parois 14.

La couche de scellement 20 est en un matériau polymérisable en solution non miscible avec le fluide fonctionnel 18, c'est-à-dire sans interaction avec le fluide fonctionnel 18. Il est polymérisable à l'ambiante ou à chaud ou sous irradiation.

Avantageusement, le matériau 20 utilisé est du parylène. Celui-ci peut être déposé par CVD (abréviation de "Chemical Vapor Deposition") à température ambiante de façon très conforme, c'est-à-dire épousant les formes sur lesquelles il est déposé, telle qu'ici les parois 14, le fluide fonctionnel 18 et les plots 50 ainsi que leurs logements 500. Ce matériau peut se déposer sur des liquides dont la tension de vapeur est plus faible que la pression de la chambre de dépôt. Ce polymère permet un revêtement total de haute performance. La structure résultant du traitement, linéaire et cristalline, possède de bonnes qualités optiques (le parylène est incolore et transparent) et de bonnes propriétés de protection (le parylène est imperméable, résistant aux environnements agressifs, aux solvants et aux gaz).

De préférence, l'épaisseur e de la couche de matériau de scellement est comprise entre 0,2 et 5 µm.

Le dépôt peut être réalisé de sorte que le matériau de scellement remplisse complètement les logements 500 des plots 50, que ceux-ci soient débouchant sur la face 100 de la couche de matériau 10 (figure 2C) ou non (figure 2E).

Dans le mode avantageux où les plots 50 sont débouchant (figure 2C, 2F), comme le dépôt est conforme une zone de contact lie donc la couche de scellement 20 avec la couche de matériau ou substrat 10, ce qui est encore plus favorable à la tenue mécanique de l'ensemble.

La taille, la localisation et la densité des plots 50 ou microcavités à placer dans les cavités 16 vont dépendre de l'application. L'homme de l'art veillera notamment pour les applications optiques, et surtout ophtalmiques, que les plots 50 n'apportent pas de perturbations visuelles rédhibitoires.

Avantageusement, chaque plot 50 présente un diamètre extérieur Dext compris entre 1 et 20 µm (figure 2E).

Le fluide fonctionnel 18 peut remplir les cavités 16 partiellement ou complètement. La hauteur H de remplissage du fluide fonctionnel 18 est avantageusement comprise entre 5 et 20 µm (figure 2E).

Dans le mode avantageux où les plots 50 sont débouchant, le parylène déposé peut remplir totalement la microcavité 50 (figure 2F).

Les plots ou microcavités 50 peuvent être situées dans une cavité 16 ou bien à l'intérieur des parois 14. Plusieurs configurations (éventuellement combinables) sont présentées aux figures 3A à 3C :
- la figure 3A montre la réalisation d'un plot 50 à l'intérieur de chaque cavité 16 (il est bien sûr possible d'en réaliser plusieurs par cavité),
- la figure 3B montre qu'il est possible que les plots 50 fassent partie intégrante des parois 14,
- la figure 3C montre que les plots 50 peuvent se situer à l'intersection des parois 14.

Dans le cadre de l'invention, les plots ou microcavités 50 et les logements 500 peuvent avoir différentes formes (éventuellement choisies de façon indépendantes): rondes, carrées, rectangulaires, en croix, en étoiles etc...

Pour des applications moins contraignantes optiquement, il peut être favorable de prévoir des plots 50 formant des tranchées 5, une tranchée continue 5 entourant chaque cavité 16 (figure 3D).

Dans les applications très contraignantes où les cavités sont remplies d'un fluide ophtalmique, le facteur de remplissage des cavités 16 (c'est-à-dire le taux de surface apparente remplie par rapport à la surface totale de la structure) doit être supérieur à 90 %, et de préférence compris entre 96 % et 98,5 %. Ainsi, pour ces applications, on cherche à réaliser des plots 50 dont la surface apparente rapportée à celle de la surface totale soit inférieure à 10 %.

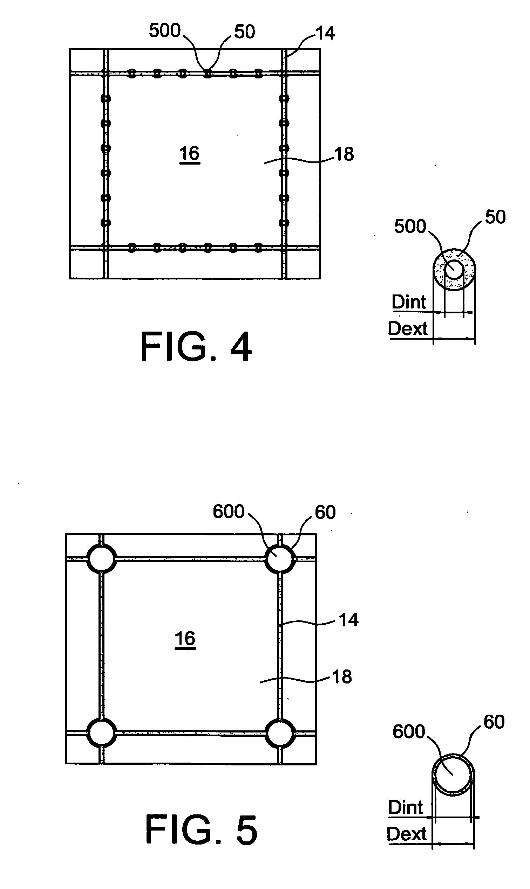

Dans les exemples de réalisation correspondant aux figures 4 et 5, selon lequel des parois 14 de 2 µm d'épaisseur forment des cavités 16, de section carrée de 200 µm de côté, le taux de surface apparent est égal à 2 % (la surface apparente des parois étant égale à 800 µm² pour une surface totale d'une cavité égale à 200×200 µm²). Il est ainsi possible de disposer d'une surface apparente de 800 µm² pour réaliser des plots 50,60 de surface apparente préférentiellement égale à 4 %.

En utilisant par exemple des masques appropriés permettant l'obtention de plots cylindriques creux 50, 60, on peut ainsi réaliser avantageusement des plots 50, 60 de même largeur unitaire de 2 µm que celle des parois et en répartir au choix :
- un nombre égal à 28 et de diamètre intérieur Dint de 4 µm autour d'une cavité selon la figure 4,
- un nombre égal à 4 et de diamètre intérieur Dint de 16 µm autour d'une cavité selon la figure 5.

Un procédé de réalisation de l'invention va être décrit en liaison avec les figures 2A à 2D.

Un substrat ou couche de matériau 10 est utilisé pour réaliser les cavités 16. Pour les applications optiques, ce substrat 10 est avantageusement transparent. Ce peut être une dalle de verre de quartz ou un film souple de type PET (Poly Ethylene Terephthalate). Ce substrat 10 peut, au besoin, être temporairement solidarisé à une plaque support (non représentée), par exemple une plaquette de type silicium ou une dalle de verre afin de lui assurer une tenue mécanique suffisante pour réaliser les étapes technologiques ultérieures. L'assemblage peut, par exemple, être réalisé par un collage adapté, dont l'énergie de collage est à la fois compatible avec les étapes technologiques ultérieures et avec le démontage ultérieur de la plaque support.

Selon l'application le substrat 10 peut être fonctionnalisé. C'est le cas par exemple lors de la fabrication d'afficheur à base de cristaux liquide : on prévoit sur le substrat des pistes métalliques et une couche d'alignement des cristaux.

Ce substrat 10 peut comporter en surface une ou plusieurs couches présentant des fonctions particulières par exemple des fonctions de résistance aux chocs, de résistance à la rayure, de coloration...

Des parois 14 sont réalisées à la surface du substrat 10 pour délimiter les cavités 16 destinées à contenir le liquide fonctionnel. Des plots 50 sont également réalisés, avantageusement simultanément aux parois 14, pour délimiter des logements 500 destinés à former les futurs plots d'ancrage de la couche de scellement. Certains des plots 50, peuvent également servir à délimiter simultanément certaines des cavités 16 destinées à contenir le liquide fonctionnel.

Les parois 14 et les plots 50 peuvent par exemple être réalisées par dépôt d'une (ou plusieurs) résine photosensible adaptée et élimination locale de cette résine pour définir les cavités 16 et les logements 500.

En variante, il est possible de déposer une couche de polymère sur le substrat puis de graver localement cette couche au travers d'un masque, par exemple par gravure plasma RIE classique ou haute densité avec de l'O₂ mélangé ou non avec un gaz fluoré type SF₆ et/ou CHF₃.

Il est possible également de laminer sur le substrat 10 un film polymère dans lequel les cavités 16 et les logements 500 ont été préalablement réalisés, par exemple par gravure.

Les parois 14 et les plots 50 sont avantageusement réalisés simultanément lors d'un même procédé d'élaboration. Cependant il est bien sûr possible, de réaliser les parois 14 et les plots 500 par des procédés distincts (s'ils sont compatibles) et/ou de manière successive.

On obtient sur la figure 2B des logements 500 débouchant sur le substrat 10, mais il est possible, notamment lorsque le logement 500 est obtenu par gravure qu'il subsiste au fond du logement, au contact du substrat 10, un matériau distinct du substrat, par exemple le polymère dans lequel ont été réalisés les plots 50.

Ensuite, on remplit sélectivement chaque cavité 16 de fluide fonctionnel 18, par exemple comme illustré figure 3B, jusqu'à atteindre le sommet 140 des parois 14 et en veillant à ce que celui-ci ne remplisse pas les logements 500. Ceci est avantageusement réalisé par un équipement projetant des jets sous forme de gouttes, par exemple des têtes d'impression (T) projetant des gouttes d'un volume de l'ordre de 5 pico litres, le jet visant exclusivement l'intérieur des cavités 16.

Ensuite, selon l'invention, (figure 2C) on effectue le dépôt d'une couche conforme de matériau de scellement 20, de préférence du parylène, sur la surface opposée au substrat 10, constituée notamment du sommet 140 des parois, du liquide 18 et de la surface des logements 500. Ce dépôt s'effectue préférentiellement en phase gazeuse (dépôt CVD pour chemical vapor deposition en anglais) à température ambiante sur une épaisseur uniforme, selon les applications de quelques nanomètres à quelques µm. Le dépôt conforme permet le dépôt de la couche de scellement non seulement sur le fond 500b du logement, constitué (sur les figures 2) par la surface plane 100 du substrat 10, mais également le long de leur paroi intérieure 500a.

L'adhérence du matériau de scellement 20 est ainsi réalisée à la fois sur le sommet 140 des parois, et à l'intérieur des logements 500 des plots 50, c'est-à-dire le long de leur paroi intérieure 500a, et au fond 500b. L'adhérence du matériau de scellement 20 se faisant sur une surface supérieure (sensiblement égale à l'ensemble des surface de sommets de paroi auquel sont ajoutées celles 500a et 500b des plots 50), elle est bien plus efficace qu'un simple laminage de film au sommet des parois 14.

Selon une variante de l'invention, un autre matériau 70, tel qu'un polymère, peut être déposé, dans les logements 500, à la surface de la couche de matériau de scellement 20, de préférence jusqu'à remplir le volume restant V à l'intérieur des logements 500. Cette variante peut être notamment avantageuse pour les applications optiques, la présence d'un volume restant V à l'intérieur des logements 500 peut entrainer des perturbations optiques non acceptables (diffusion, diffraction...). On choisira dans ce cas avantageusement, un matériau 70 de même indice optique que celui du fluide fonctionnel 18.

Ce dépôt de matériau 70 peut être fait en veillant à remplir uniquement le volume V restant (figure 3D), par exemple dépôt localisé par exemple à l'aide d'une imprimante à jet de matière. Il peut alternativement, et notamment si les volumes à combler sont très faibles, être fait jusqu'à obtenir une troisième couche uniforme de matériau 70 au-dessus de la couche de scellement 20 (figure 2D'), par exemple par dépôt par « spin coating » et durcissement du matériau déposé.

Par exemple, il pourra s'agir d'un polymère photosensible étalé à la tournette puis durci thermiquement. Dans cet exemple, afin de faciliter le remplissage du volume restant V des logements 500 et notamment de chasser les bulles d'air éventuellement piégées dans les plots, on peut réaliser une mise sous vide après l'étalement et avant le durcissement du polymère.

Une ou plusieurs couches supplémentaires pourront ensuite être déposées selon l'application. Par exemple dans le cas d'une application optique, on pourra prévoir des couches ayant des fonctions de résistance aux chocs, de résistance à la rayure, de coloration, d'anti-reflet, d'anti-salissure...

Bien entendu, ces modes de réalisation ne sont donnés qu'à titre indicatif, et les différentes sélections effectuées peuvent être combinées entre elles pour également faire partie d'un procédé ou d'un dispositif selon l'invention.

L'invention a ainsi de nombreuses applications dans le domaine optique, notamment pour la réalisation de films photochromiques, de films polariseurs passifs, d'écrans de visualisation à base de cristaux liquides... Elle peut s'appliquer plus généralement à tous les domaines où l'on souhaite encapsuler un fluide dans des cavités étanches de dimensions microniques, par exemple pour réaliser des canaux fluidiques, des micro-capteurs, des actuateurs....

## Revendications

1. Dispositif (22) comprenant une première couche de matériau (10), une deuxième couche de matériau (20), formant couche de scellement, et des parois (14), des cavités (16) étanches étant délimitées par les première et deuxième couches de matériau et lesdites parois, au moins partiellement remplies d'un fluide (18), des plots (50,60) solidaires de la première couche de matériau (10), et délimitant un logement (500) rempli au moins partiellement (V) du matériau de la deuxième couche (20).

2. Dispositif (22) selon la revendication 1 dans lequel les parois (14) et les plots (50, 60) ont sensiblement la même hauteur.

3. Dispositif (22) selon la revendication 1 ou 2 dans lequel au moins une partie de certains plots (50) constitue des parois (14).

4. Dispositif (22) selon l'une des revendications précédentes dans lequel tous les plots (50) constituent en partie des parois (14).

5. Dispositif (22) selon l'une des revendications précédentes dans lequel au moins une partie des plots (50) sont situées à l'intersection de plusieurs parois (14).

6. Dispositif (22) selon l'une quelconque des revendications précédentes dans lequel au moins une partie des plots (50) sont adjacents aux parois (14).

7. Dispositif (22) selon l'une quelconque des revendications précédentes dans lequel la deuxième couche (20) est en contact de la première couche (10) au niveau des logements (500).

8. Dispositif selon l'une quelconque des revendications précédentes dans lequel les cavités (16) sont remplies d'un fluide (18) fonctionnel de qualités optiques prédéterminées.

9. Dispositif selon la revendication 8 dans lequel le fluide (18) est un liquide photosensible ou thermosensible, ou un liquide d'indice optique déterminé.

10. Dispositif selon l'une des revendications précédentes dans lequel le matériau de la deuxième couche (20) est du parylène.

11. Dispositif selon l'une quelconque des revendications précédentes dans lequel le matériau de la deuxième couche (20) est déposé de façon conforme dans les logements et sur les cavités.

12. Dispositif selon l'une quelconque des revendications précédentes dans lequel les logements (500) sont complètement remplis du matériau de la deuxième couche (20).

13. Dispositif selon l'une quelconque des revendications 1 à 11, dans lequel les logements (500) sont partiellement remplis de matériau de la deuxième couche (20).

14. Dispositif selon la revendication 13, dans lequel les logements partiellement remplis de matériau de la deuxième couche (20) sont remplis complètement par un matériau (70).

15. Dispositif selon la revendication 14 dans lequel le matériau (70) a le même indice optique que celui du fluide fonctionnel(18).

16. Dispositif selon la revendication 15, dans lequel le matériau (70) de même indice optique que celui du fluide (18) et remplissant complètement les logements (500) des plots (50) forme une troisième couche (70) de matériau se superposant à la deuxième couche de matériau (20).

17. Procédé de réalisation d'un dispositif (22) doté de cavités (16) comportant un fluide fonctionnel séparées par des parois (14) comprenant les étapes suivantes :
- la réalisation sur une structure (10) de parois (14) délimitant les cavités (16),
- la réalisation sur la face (100) de la structure en contact avec les parois (14), de plots (50) délimitant au moins un logement (500)
- le remplissage des cavités (16) par un fluide fonctionnel(18) ;
- le dépôt conforme d'une couche continue d'un matériau de scellement (20) fermant les cavités (16) remplies de fluide fonctionnel (18) et occupant au moins partiellement l'intérieur des logements (500).

18. Procédé selon la revendication 17, dans lequel le dépôt conforme d'une couche continue d'un matériau de scellement (20) est un dépôt de parylène.

19. Procédé selon la revendication 18, dans lequel le dépôt de parylène est un dépôt par CVD suivi d'une polymérisation à l'ambiante.

20. Procédé selon l'une des revendications 17 à 19, dans lequel les plots (50) sont réalisés selon le même procédé et simultanément aux parois (14).

21. Procédé selon l'une des revendications 17 à 20, dans lequel la réalisation des parois et/ou des plots se fait par photolithographie d'une résine.

22. Procédé selon la revendication l'une des revendications 17 à 20, dans lequel la réalisation des parois et/ou des plots se fait par gravure au travers un masque d'une couche de polymère.

23. Procédé selon l'une quelconque des revendications 17 à 22, dans lequel le remplissage des cavités (16) est réalisé par une technique de jet de fluide fonctionnel (18) sous forme de gouttes à l'aide de tête(s) d'impression (T).

24. Procédé selon l'une quelconque des revendications 17 à 23, dans lequel, après le dépôt du matériau de scellement (20) dans le logement (500) des plots (50) et fermant les cavités (16), on effectue un remplissage du volume restant (V) dans le logement (500) revêtu du matériau de scellement (20) par un matériau (70).

25. Procédé selon l'une quelconque des revendications 17 à 23, dans lequel après le dépôt du matériau de scellement (20) dans le logement (500) de plots (50) et fermant les cavités (16), on réalise un dépôt d'un matériau (70) sur la couche de matériau de scellement (20) et dans le volume restant (V) dans le logement (500) du plot (50).

26. Procédé selon la revendication 25 dans lequel le dépôt de matériau (70) est réalisé par une technique de type « spin coating » suivie d'un durcissement du matériau.

## Claims

1. Device (22) comprising a first layer of material (10), a second layer of material (20), forming a sealing layer, and walls (14), tight cavities (16) being delimited by the first and second layers of material and said walls, at least partially filled with a fluid (18), blocks (50, 60) rigidly connected to the first layer of material (10), and defining a housing (500) filled at least partially (V) with the material of the second layer (20).

2. Device (22) according to claim 1 wherein the walls (14) and the blocks (50, 60) have substantially the same height.

3. Device (22) according to claim 1 or 2 wherein at least part of some blocks (50) form walls (14).

4. Device (22) according to any of the above claims wherein all the blocks (50) partially form walls (14).

5. Device (22) according to any of the above claims wherein at least part of the blocks (50) are located at the intersection of several walls (14).

6. Device (22) according to any of the above claims wherein at least part of the blocks (50) are adjacent to the walls (14).

7. Device (22) according to any of the above claims wherein the second layer (20) is in contact with the first layer (10) at the housings (500).

8. Device according to any of the above claims wherein the cavities (16) are filled with a functional fluid (18) having pre-determined optical qualities.

9. Device according to claim 8 wherein the fluid (18) is a photosensitive or heat-sensitive fluid, or a fluid having a determined optical index.

10. Device according to any of the above claims wherein the material of the second layer (20) is parylene.

11. Device according to any of the above claims wherein the material of the second layer (20) is deposited in a conforming manner in the housings and on the cavities.

12. Device according to any of the above claims wherein the housings (500) are completely filled with the material of the second layer (20).

13. Device according to any of claims 1 to 11, wherein the housings (500) are partially filled with material from the second layer (20).

14. Device according to claim 13, wherein the housings partially filled with material from the second layer (20) are filled with a material (70).

15. Device according to claim 14 wherein the material (70) has the same optical index as that of the functional fluid (18).

16. Device according to claim 15, wherein the material (70) having the same optical index as that of the functional fluid (18) and filling the housings (500) of the blocks (50) forms a third layer (70) of material superimposed on the second layer of material (20).

17. Method for producing a device (22) provided with cavities (16) comprising a functional fluid separated by walls (14) comprising the following steps:
- production on a structure (10) of walls (14) defining the cavities (16),
- production on the face (100) of the structure in contact with the walls (14), of blocks (50) defining at least one housing (500),
- filling of cavities (16) by a functional fluid (18),
- conforming deposition of a continuous layer of a sealing material (20) sealing the cavities (16) filled with functional fluid (18) and occupying the inside of the housings (500) at least partially.

18. Method according to claim 17, wherein the conforming deposition of a continuous layer of a sealing material (20) is a parylene deposition.

19. Method according to claim 18, wherein the parylene deposition is a CVD deposition followed by polymerisation under ambient conditions.

20. Method according to any of claims 17 to 19, wherein the blocks (50) are produced using the same method and at the same time as the walls (14).

21. Method according to any of claims 17 to 20, wherein the walls and/or blocks are produced by means of resin photolithography.

22. Method according to any of claims 17 to 20, wherein the production of the walls and/or blocks is performed by means of etching via a mask of a polymer layer.

23. Method according to any of claims 17 to 22, wherein the filling of the cavities (16) is performed by means of a functional fluid (18) jet technique in drop form using print head(s) (T).

24. Method according to any of claims 17 to 23, wherein, after deposition of the sealing material (20) in the housing (500) of the blocks (50) sealing the cavities (16), the residual volume (V) in the housing (500) coated with sealing material (20) is filled with a material (70).

25. Method according to any of claims 17 to 23, wherein after the deposition of the sealing material (20) in the housing (500) of blocks (50) sealing cavities (16), a material (70) is deposited on the layer of sealing material (20) and in the residual volume (V) in the housing (500) of the block (50).

26. Method according to claim 25 wherein the deposition of the material (70) is performed by means of the spin coating type technique followed by hardening of the material.

## Patentansprüche

1. Anordnung (22) mit einer ersten Materialschicht (10), mit einer eine Versiegelungs- bzw. Verschlussschicht bildenden zweiten Materialschicht (20), sowie mit Wandungen (14), dichten Hohlräumen (16), welche durch die erste und die zweite Materialschicht und die genannten Wandungen begrenzt werden und wenigstens teilweise mit einem Strömungsmittel (18) gefüllt sind, sowie mit Blöcken bzw. Klötzen (50, 60), welche mit der ersten Materialschicht (10) fest verbunden sind und eine Kammer (500) begrenzen, welche wenigstens teilweise (V) mit dem Material der zweiten Materialschicht (20) gefüllt ist.

2. Anordnung (22) nach Anspruch 1, bei welcher die Wandungen (14) und die Blöcke bzw. Klötze (50, 60) im Wesentlichen dieselbe Höhe aufweisen.

3. Anordnung (22) nach Anspruch 1 oder 2, bei welcher wenigstens ein Teil bestimmter Blöcke bzw. Klötze (50) Wandungen (14) bilden.

4. Anordnung (22) nach einem der vorhergehenden Ansprüche, bei welcher sämtliche Blöcke bzw. Klötze (5) teilweise Wandungen (14) bilden.

5. Anordnung (22) nach einem der vorhergehenden Ansprüche, bei welcher wenigstens ein Teil der Blöcke bzw Klötze (50) an die Schnittstelle mehrerer Wandungen (14) liegen.

6. Anordnung (22) nach einem der vorhergehenden Ansprüche, bei welcher wenigstens ein Teil der Blöcke bzw. Klötze (50) benachbart zu den bzw. angrenzend an die Wandungen (14) angeordnet sind.

7. Anordnung (22) nach einem der vorhergehenden Ansprüche, bei welcher die zweite Schicht (20) auf dem Niveau bzw. im Bereich der Kammern (500) in Kontakt mit der ersten Schicht (10) steht.

8. Anordnung nach einem der vorhergehenden Ansprüche, bei welcher die Hohlräume (16) mit einem funktionalen Strömungsmittel (18) bestimmter vorgegebener optischer Eigenschaften gefüllt sind.

9. Anordnung nach Anspruch 8, bei welcher das Strömungsmittel (18) eine licht- oder wärmeempfindliche Flüssigkeit oder eine Flüssigkeit mit gegebenem optischen (Brechungs-) Index ist.

10. Anordnung nach einem der vorhergehenden Ansprüche, bei welcher das Material der zweiten Schicht (20) Parylen ist.

11. Anordnung nach einem der vorhergehenden Ansprüche, bei welcher das Material der zweiten Schicht (20) in konformer, d.h. formgetreuer Weise in den Kammern und auf den Hohlräumen abgeschieden wird.

12. Anordnung nach einem der vorhergehenden Ansprüche, bei welcher die Kammern (500) vollständig mit Material der zweiten Schicht gefüllt sind.

13. Anordnung nach einem der Ansprüche 1 bis 11, bei welcher die Kammern (500) teilweise mit Material der zweiten Schicht gefüllt sind.

14. Anordnung nach Anspruch 13, bei welcher die teilweise mit Material der zweiten Schicht (20) gefüllten Kammern vollstandig mit einem Material (70) aufgefüllt sind.

15. Anordnung nach Anspruch 14, bei welcher das Material (70) denselben optischen (Brechungs-) Index wie das Material des funktionellen Strömungsmittels (18) besitzt.

16. Anordnung nach Anspruch 15, bei welcher das Material (70) vom selben optischen (Brechungs-) Index wie das Strömungsmittel (18), und das die Kammern (500) der Klötze bzw. Blöcke (50) vollständig füllt, eine dritte Materialschicht (70) über der zweiten Materialschicht (20) bildet.

17. Verfahren zur Herstellung einer Anordnung mit durch Wandungen voneinander getrennten, ein Strömungsmittel enthaltenden Hohlräumen, wobei das Verfahren die folgenden Stufen bzw. Etappen umfasst:
- auf einer Tragstruktur (10) werden die Hohlräume (16) begrenzende Wandungen erzeugt;
- auf der mit den Wandungen (14) in Kontakt stehenden Fläche (100) werden Blöcke bzw. Klötze (50) erzeugt, die wenigstens eine Kammer (500) begrenzen;
- Füllen der Hohlräume (16) mit einem funktionalen Strömungsmittel (18);
- konforme, d.h. formgetreue Abscheidung einer kontinuierlich zusammenhängenden Schicht (20) aus einem Versiegelungs- bzw. Verschlussmaterial, welches die mit dem funktionalen Strömungsmittel (18) gefüllten Hohlräume (16) schließt und das Innere der Kammern (50) wenigstens teilweise ausfüllt.

18. Verfahren nach Anspruch 17, bei welchem die formgetreue Abscheidung einer zusammenhängenden Schicht eines Versiegelungs- bzw. Verschließmaterials (20) eine Abscheidung von Parilen ist.

19. Verfahren nach Anspruch 18, bei welchem die Parilen-Abscheidung eine Abscheidung aus der Dampfphase (CVD) mit folgender Polymerisation bei Umgebungstemperatur ist.

20. Verfahren nach einem der Ansprüche 17 bis 19, bei welchem die Blöcke bzw. Klötze (50) nach demselben Verfahren wie die Wandungen (14) und gleichzeitig mit diesen hergestellt werden.

21. Verfahren nach einem der Ansprüche 17 bis 20, bei welchem die Herstellung der Wandungen und/oder der Blöcke bzw. Klötze mittels Lichtdruckverfahren mit einem Harz erfolgt.

22. Verfahren nach einem der Ansprüche 17 bis 20, bei welchem die Herstellung der Wandungen und/oder der Blöcke bzw. Klötze mittels Ätzung durch eine Maske aus einer Polymerschicht hindurch erfolgt.

23. Verfahren nach einem der Ansprüche 17 bis 22, bei welchem das Füllen der Hohlräume mittels Jet-Strahlverfahren mit einem funktionalen Strömungsmittel (18) in Tropfenform mit Hilfe eines Druckerkopfes (T) erfolgt.

24. Verfahren nach einem der Ansprüche 17 bis 23, bei welchem nach dem Abscheiden des Versiegelungs- bzw. Verschlussmaterials (20) in der Kammer (500) der Blöcke bzw. Klötze (50) und dem Verschließen der Hohlräume (16) das verbleibende Volumen (V) in der mit dem Versiegelungs- bzw. Verschlussmaterial (20) überzogenen Kammer (500) mit einem Material (70) aufgefüllt wird.

25. Verfahren nach einem der Ansprüche 17 bis 23, bei welchem nach der Abscheidung des Versiegelungs- bzw. Verschlussmaterials (20) in der Kammer (500) der Blöcke bzw. Klötze (50) und dem Verschließen der Hohlräume (16) eine Abscheidung eines Materials (70) auf der Schicht aus dem Versiegelungs- bzw. Verschlussmaterial (20) und in dem verbleibenden Volumen (V) in der Kammer (500) des Blocks bzw. Klotzes (50) erfolgt.

26. Verfahren nach Anspruch 25, bei welchem die Abscheidung des Materials (70) mittels einer Technik vom "spin coating"-Typ mit nachfolgender Härtung des Materials erfolgt.
